# EUROPEAN PATENT APPLICATION

(11) **EP 3 457 387 A1**
(43) Date of publication of application: **20.03.2019**
(21) Application number: 18190448.3
(22) Date of filing: 23.08.2018
(51) Int. Cl.: G09B 29/00

(54) **LOCATION SETTING METHOD**

(30) Priority: 15.09.2017 JP 2017177738
(71) Applicant: Toshiba Tec Kabushiki Kaisha, Shinagawa-ku Tokyo 141-0032 (JP); Kabushiki Kaisha Toshiba, Tokyo 105-0023 (JP)
(72) Inventor: Shimoyama, Naoki, Tokyo, 141-8562 (JP)
(74) Representative: Hoffmann Eitle

(57) **Abstract**

A method for configuring an image forming apparatus using a portable terminal, includes the steps of detecting a location of the portable terminal, transmitting to a plurality of image forming apparatuses, including the image forming apparatus, a query for information about the image forming apparatuses, displaying an operation panel on the portable terminal indicating the location of the portable terminal with the information about the image forming apparatuses, accepting an operation on the operation panel to select the image forming apparatus, and transmitting information about the location to the image forming apparatus.

## Description

### CROSS-REFERENCE TO RELATED APPLICATION

This application is based upon and claims the benefit of priority from Japanese Patent Application No. 2017-177738, filed September 15, 2017, the entire contents of which are incorporated herein by reference.

### FIELD

Embodiments described herein relate generally to a technique of easily setting location information to an image forming apparatus.

### BACKGROUND

In the related art, there is a technique for dynamically changing configurations of an image forming apparatus based on a distance between a user and the image forming apparatus to improve the usability of the image forming apparatus.

### SUMMARY OF THE INVENTION

One of the objects of the present invention is to improve prior art techniques and overcome at least some of the prior art problems as for instance above illustrated.

According to a first aspect of the present invention, it is provided a method for configuring an image forming apparatus using a portable terminal, comprising:
detecting a location of the portable terminal;
transmitting to a plurality of image forming apparatuses, including the image forming apparatus, a query for information about the image forming apparatuses;
displaying an operation panel on the portable terminal indicating the location of the portable terminal with the information about the image forming apparatuses;
accepting an operation on the operation panel to select the image forming apparatus; and
transmitting information about the location to the image forming apparatus.

Optionally, in the method according to the first aspect of the invention, the location of the portable terminal is displayed on a map.

Optionally, the method according to the first aspect of the invention further comprises displaying coordinates of the location on the map.

Optionally, the method according to the first aspect of the invention further comprises displaying a list of maps, each corresponding to a different building name and floor level, wherein the map is selected from the list.

Optionally, the method according to the first aspect of the invention further comprises displaying on the operation panel a list of information about each of a plurality of image forming apparatuses, wherein the image forming apparatus is selected from the list.

Optionally, the method according to the first aspect of the invention further comprises the displaying comprising displaying on the operation panel a building name and a floor level.

Optionally, the method according to the first aspect of the invention further comprises the location is detected using a global positioning system (GPS) sensor or a geomagnetic sensor installed in the portable terminal.

According to a second aspect of the present invention, it is provided a portable terminal configured to communicate with a plurality of image forming apparatuses, comprising:
a sensor configured to detect a location of the portable terminal;
a touch panel (though the aspect and the present disclosure are not limited to a touch panel, as in fact other panels can be used) configured to accept an operation; and
a processor configured to execute instructions to:
   transmit to each of the image forming apparatuses a query for information about the image forming apparatus;
   display an operation panel on the touch panel indicating the location of the portable terminal with the information about at least one of the image forming apparatuses; and
   transmit information about the location to one of the image forming apparatuses selected by an operation on the touch panel.

Optionally, in the portable terminal according to the second aspect of the invention, the processor executes instructions to display the location of the portable terminal on a map.

Optionally, in the portable terminal according to the second aspect of the invention, the processor executes instructions to display coordinates of the location on the map.

Optionally, in the portable terminal according to the second aspect of the invention the processor executes instructions to display a list of maps, each corresponding to a different building name and floor level, and the map is selected from the list.

Optionally, in the portable terminal according to the second aspect of the invention, the processor executes instructions to display on the operation panel a list of information about each of a plurality of image forming apparatuses, and the image forming apparatus is selected from the list.

Optionally, in the portable terminal according to the second aspect of the invention, the processor executes instructions to display on the operation panel a building name and a floor level.

Optionally, in the portable terminal according to the second aspect of the invention, the sensor is a global positioning system (GPS) sensor or a geomagnetic sensor.

According to a third aspect of the present invention, it is provided a non-transitory computer readable medium storing a program causing a computer to execute a method of configuring an image forming apparatus, said method comprising:
detecting a location of the portable terminal;
transmitting to a plurality of image forming apparatuses, including the image forming apparatus, a query for information about the image forming apparatuses;
displaying an operation panel on the portable terminal indicating the location of the portable terminal with the information about the image forming apparatuses;
accepting an operation on the operation panel to select the image forming apparatus; and
transmitting information about the location to the image forming apparatus.

Optionally, in the medium according to the third aspect of the invention, the location of the portable terminal and coordinates of the location are displayed on a map. Optionally, in the medium according to the third aspect of the invention, the method further comprises displaying a list of maps, each corresponding to a different building name and floor level, wherein the map is selected from the list.

Optionally, in the medium according to the third aspect of the invention, the method further comprises displaying on the operation panel a list of information about each of a plurality of image forming apparatuses, wherein the image forming apparatus is selected from the list.

Optionally, in the medium according to the third aspect of the invention, the displaying comprises displaying on the operation panel a building name and a floor level.

Optionally, in the medium according to the third aspect of the invention, the location is detected using a global positioning system (GPS) sensor or a geomagnetic sensor installed in the portable terminal.

In general, it is provided a non-transitory computer readable medium storing a program causing a computer to execute a method of configuring an image forming apparatus, the method having steps as herein described.

### DESCRIPTION OF THE DRAWINGS

FIG. 1 is a diagram illustrating a system configuration example.
FIG. 2 is a block diagram of a portable terminal.
FIG. 3 is a diagram illustrating an operation screen displayed on an operation panel.
FIG. 4 is a flowchart illustrating screen display.
FIG. 5 is a flowchart illustrating current location display.
FIG. 6 is a flowchart illustrating device information display.
FIG. 7 is a flowchart illustrating map changing.
FIG. 8A is a diagram illustrating screen transition during map changing.
FIG. 8B is a diagram illustrating screen transition.
FIG. 8C is a diagram illustrating screen transition.
FIG. 9 is a flowchart illustrating current location changing.
FIG. 10A is a diagram illustrating screen transition during current location changing.
FIG. 10B is a diagram illustrating screen transition.
FIG. 11 is a flowchart illustrating device changing.
FIG. 12A is a diagram illustrating screen transition during device changing.
FIG. 12B is a diagram illustrating screen transition.
FIG. 12C is a diagram illustrating screen transition.
FIG. 13 is a flowchart illustrating location information registration.
FIG. 14A is a diagram illustrating screen transition during location information registration.
FIG. 14B is a diagram illustrating screen transition.
FIG. 14C is a diagram illustrating screen transition.

### DETAILED DESCRIPTION

According to an embodiment, there is provided a method for configuring an image forming apparatus using a portable terminal including the steps of detecting a location of the portable terminal, transmitting to a plurality of image forming apparatuses, including the image forming apparatus, a query for information about the image forming apparatuses, displaying an operation panel on the portable terminal indicating the location of the portable terminal with the information about the image forming apparatuses, accepting an operation on the operation panel to select the image forming apparatus, and transmitting information about the location to the image forming apparatus.

According to the position setting method of an exemplary embodiment, position information of an image forming apparatus is easily set.

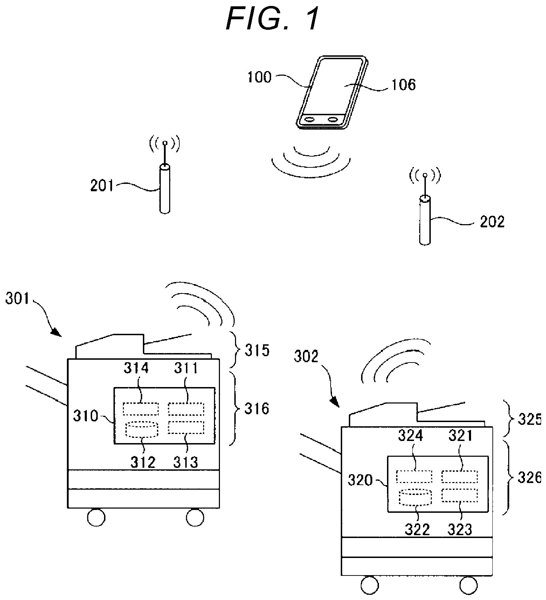

FIG. 1 illustrates a system configuration example of an embodiment. A system 1 includes a plurality of image forming apparatuses 301 and 302, a portable terminal 100, and access points 201 and 202. FIG. 1 illustrates only the image forming apparatuses 301 and 302, but three or more image forming apparatuses may be disposed in respective floors of a building. FIG. 1 illustrates only the access points 201 and 202, but three or more access points may be disposed in the respective floors of the building. In an embodiment, an image forming apparatus is described as an example of a device of which location information is set, but a device is not limited thereto.

The portable terminal 100 has a network interface enabling wireless communication to be performed, and realizes each function by loading a program stored in a storage medium to a memory and a central processing unit (CPU) executing the program.

The image forming apparatus 301 includes a scanning unit 315 which scans and reads a document sheet, a printing unit 316 which forms an image on a sheet, and a control unit 310. The control unit 310 is a unit which comprehensively controls each device of the image forming apparatus 301, and includes a processor 311, a subsidiary storage device 312, a network interface 313, and a memory 314. The processor 311 is, for example, a CPU, loads a program stored in the subsidiary storage device 312 into the memory 314, and performs calculation. Consequently, the processor 311 controls each device of the image forming apparatus 301.

The subsidiary storage device 312 is a nonvolatile storage device, and is, for example, a hard disk drive (HDD) . The subsidiary storage device 312 stores image data read by the scanning unit 315 or image data transmitted from the outside, programs for executing calculation in the apparatus, and the like, in a nonvolatile manner. The memory 314 is a volatile main storage device, and stores execution programs or necessary data in a volatile manner. The network interface 313 transmits and receives data to and from other apparatuses via a wireless network based on the access points 201 and 202. The network interface 313 includes a unit performing short-range radio communication with other apparatuses. The network interface 313 includes, for example, a wireless communication mechanism based on the standard of IEEE 802.11 or a short-range radio communication mechanism based on the standard of IEEE 802.15.1. Units based on other wireless communication standards may be included.

The image forming apparatus 302 has the same configuration, and includes a scanning unit 325, a printing unit 326 which forms an image on a sheet, and a control unit 320. The control unit 320 includes a processor 321, a subsidiary storage device 322, a network interface 323, and a memory 324. In the following description, the image forming apparatus 301 will be focused, but the same applies to the image forming apparatus 302 or image forming apparatuses not illustrated in FIG. 1.

In an embodiment, a user obtains location information by using a Global Positioning System (GPS) function of the portable terminal 100 in the vicinity of the image forming apparatuses 301 and 302. Thereafter, the location information is transmitted to the image forming apparatus by using a communication method such as Wi-Fi communication or USB communication. By taking the above form, the location information about the image forming apparatus can be set. In an embodiment, the system may include a server configured to communicate with the portable terminal.

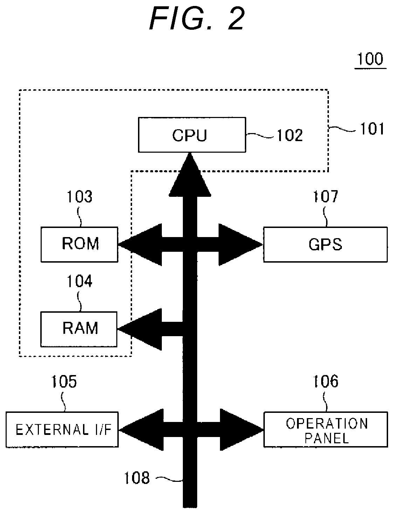

A description will be made of a configuration of a control system of the portable terminal 100 carried by the user. The portable terminal 100 is, for example, a smart phone, a tablet computer, or a notebook computer. FIG. 2 is a block diagram of the portable terminal 100 of an embodiment. A CPU 102, a read only memory (ROM) 103, a random access memory (RAM) 104, an external interface (I/F) 105, an operation panel 106, and a GPS sensor 107 are connected to each other via a system bus 108. The CPU 102, the ROM 103, and the RAM 104 form a control unit 101.

The ROM 103 stores programs executed by the CPU 102 or threshold values in advance. The ROM 103 stores in advance a program for acquiring location information about the portable terminal 100 with the GPS sensor 107. The GPS sensor 107 acquires latitude, longitude, and altitude of the portable terminal 100.

In an embodiment, an example is description in which the GPS sensor is used as a sensor acquiring latitude, longitude, and altitude of the portable terminal 100, but this is only an example, and latitude, longitude, and altitude of the portable terminal 100 may be calculated by using information from, for example, a geomagnetic sensor, an acceleration sensor, a gyro sensor, and a pressure (atmospheric pressure) sensor.

A location of the portable terminal 100 may be calculated on the basis of not only information from the GPS sensor 107 but also radio waves transmitted from the access points. As a calculation method using a wireless LAN, there is a Time-of-Arrive (TOA) method, a Time Difference of Arrival (TDOA) method, or a Received Signal Strength Indication (RSSI) method. A location of the portable terminal 100 may be calculated by using a beacon method, an Ultra-wideband (UWB) method, an Indoor Messaging System (IMES) method, and other indoor positioning technique.

Various memory areas such as an area on which a program executed by the CPU 102 is loaded, and a work area used for the program to process data are dynamically formed in the RAM 104.

The RAM 104 includes a map storage area in which map information including a floor map of each floor of a building and a corresponding map name is stored. The control unit 101 displays a floor map image on the basis of the map information stored in the map storage area. The map information stored in the map storage area is received from the outside via the external I/F 105. The map information includes information regarding latitude, longitude, and altitude (number of stories), corresponding to any location on a floor map.

The RAM 104 has an access point storage area in which access point information is stored. The control unit 101 determines latitude, longitude, and altitude (in particular, floor level) at which the portable terminal 100 is present on the basis of the information stored in the access point storage area. The access point information stored in the access point storage area is received from the outside via the external I/F 105. The access point information includes an access point name, or information regarding latitude, longitude, and altitude at which an access point is located.

The RAM 104 has a device storage area in which a device name is stored. The control unit 101 displays device information on the basis of the device information stored in the device storage area. The device information stored in the device storage area is received from the outside via the external I/F 105.

The RAM 104 has a location storage area in which latitude, longitude, and altitude information about the current location of the portable terminal 100 are stored. Location information stored in the location storage area includes information acquired by the GPS sensor 107 or a location calculated on the basis of a location of the access point.

The external I/F 105 is an interface for communicating with, for example, an external apparatus such as the image forming apparatus. The external I/F 105 may be an interface performing data communication with an external apparatus. For example, the external I/F 105 may be a device (for example, a USB memory) which is locally connected to an external apparatus, and may be a network interface performing communication via a network. A data communication method may be Wi-Fi® communication or USB communication.

The operation panel 106 is a user interface in which a display unit is integrally formed with a touch panel. The operation panel 106 has a display unit which is disposed on a front surface of a main body of the portable terminal 100 and is provided with a touch panel. The control unit 101 controls the content to be displayed on the display unit of the operation panel 106. The operation panel 106 outputs information which is input via the touch panel, to the control unit 101. Information regarding each process which is input from the operation panel 106 is stored in a predetermined region of the RAM 103 as process information. For example, to implement the above-described configuration, the portable terminal 100 displays a screen on the basis of a preset program.

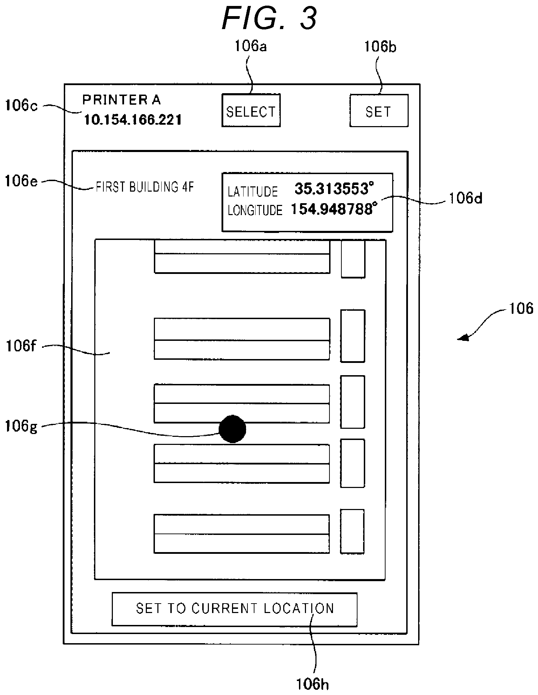

FIG. 3 is an operation screen displayed on the operation panel 106. A select button 106a is a button used for the user to select a device. A set button 106b is a button used for the user to set the location of the selected device. A device region 106c is a region in which devices which are selectable by the user and a device set by the user are displayed. In FIG. 3, "PRINTER A" is displayed in the device region 106c, and an IP address is also displayed. Location coordinates of the portable terminal 100 acquired by the GPS sensor 107 are displayed in a coordinate region 106d. In FIG. 3, "latitude 35.313553° and longitude 154.948788°" are displayed. The name of a map displayed in a map region 106f is displayed in a map name region 106e. In FIG. 3, "first building 4F" is displayed. In this example, the name of a map consists of a building and a floor name. A selected floor map is displayed in the map region 106f. Arrangement of desks in a floor is schematically illustrated in the map in FIG. 3. A current location mark 106g as shown with a black circle in FIG. 3 is a mark for selecting a predetermined location on the map region 106f. A current location set button 106h is a button for a location of the current location mark 106g on the map region 106f to the current location.

As illustrated in FIG. 3, in an embodiment, the current location of the portable terminal 100 is displayed on the map with the black circle. If an image forming apparatus is selected on the operation panel 106, latitude, longitude, and altitude can be set as location information about the image forming apparatus through simple tapping.

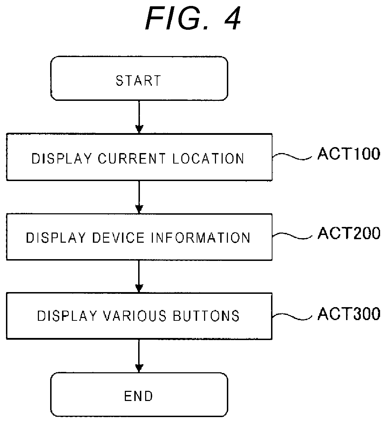

FIG. 4 is a flowchart illustrating an operation example of displaying a screen on the operation panel of the portable terminal 100 in an embodiment. The control unit 101 of the portable terminal 100 displays the current location on the operation panel 106 (ACT 100). Next, the control unit 101 displays device information about image forming apparatuses on the operation panel 106 (ACT 200). Next, the control unit 101 displays the select button 106a, the set button 106b, and the current location set button 106h on the operation panel 106 (ACT 300).

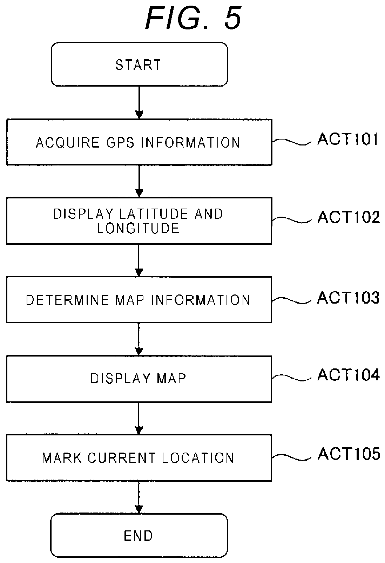

FIG. 5 is a flowchart illustrating details of the operation (ACT 100) of displaying the current location. The control unit 101 of the portable terminal 100 acquires location information about the portable terminal 100 from the GPS sensor 107 (ACT 101). The control unit 101 displays latitude and longitude in the acquired location information about the portable terminal 100 in the coordinate region 106d of the operation panel 106 (ACT 102). The control unit 101 determines latitude, longitude, and the number of floors or stories of a building at which the portable terminal 100 is currently located on the basis of location information from the connected access points 201 and 202 or the GPS sensor, and reads floor map information corresponding to the latitude, the longitude, and the number of stories of the building (ACT 103). For example, the control unit 101 may read the floor map information about buildings located within a predetermined distance from the detected location. The control unit 101 displays a map name in the map name region 106e of the operation panel 106 on the basis of the read map information, and displays a floor map in the map region 106f of the operation panel 106 (ACT 104) . The control unit 101 displays the current location mark 106g at a location corresponding to the location information from the connected access points 201 and 202 or the GPS sensor 107 on the map displayed in the map region 106f of the operation panel 106 (ACT 105).

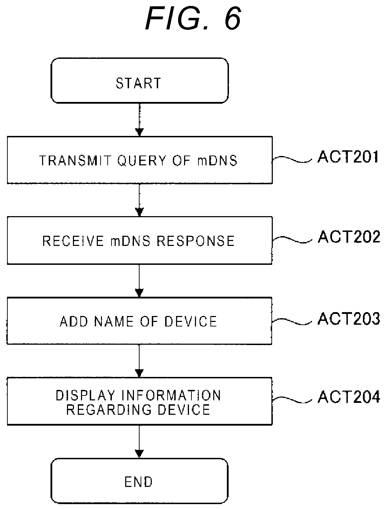

FIG. 6 is a flowchart illustrating details of the operation (ACT 200) of displaying the device information. The control unit 101 of the portable terminal 100 transmits queries of Multicast Domain Name System (mDNS) to the image forming apparatuses 301 and 302 via the access points 201 and 202 by using the external I/F 105 (ACT 201). Protocols other than mDNS may be used for locating an image forming apparatus in the network. The control unit 101 receives responses of mDNS from the image forming apparatuses (ACT 202) . The control unit 101 adds the received names of the image forming apparatuses to the arrangement of the device information, and stores the names (ACT 203). The control unit 101 displays the name of an image forming apparatus in the first arrangement of the device information in the device region 106c of the operation panel 106 (ACT 204).

In an embodiment, an example was described in which a device name and address are automatically retrieved by using the mDNS technique. In the mDNS technique, such device information present on a subnet which is different from that of a portable terminal cannot be automatically retrieved. Thus, a user may directly input and register an IP address or a host name with respect to a device present on a subnet which is different from that of a portable terminal. If an IP address is input, a printer may be accessed with the IP address as a destination without change. If a host name is input, a DNS server is inquired about an IP address, and then a printer is accessed.

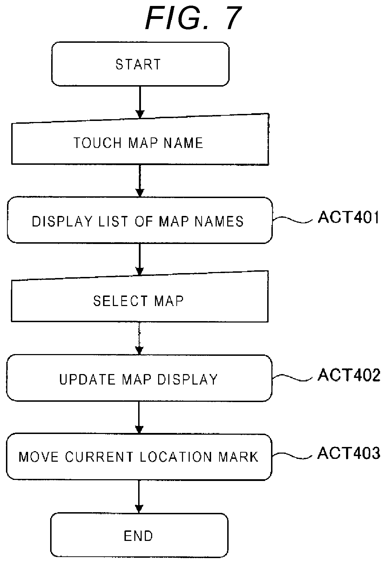

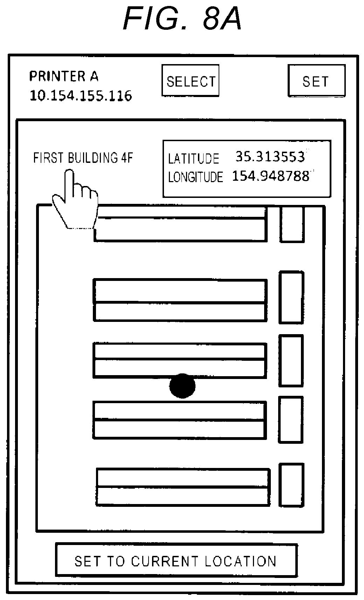

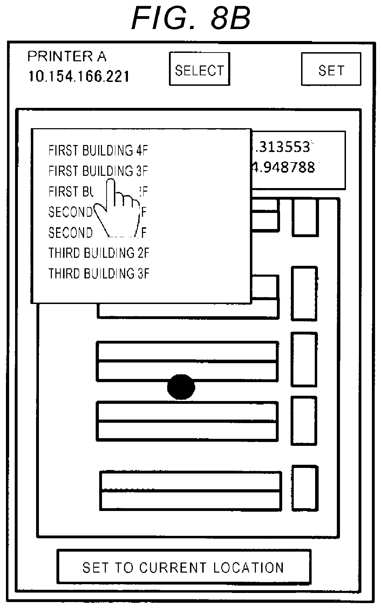

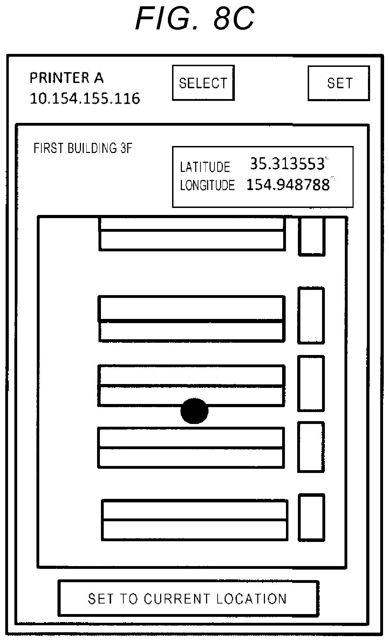

FIG. 7 is a flowchart illustrating an operation example during map changing. As illustrated in FIG. 8A, if the user taps the map name region 106e on the display unit 106 of the portable terminal 100, the control unit 101 displays stored names of maps in the map name region 106e of the display unit 106 in a list form (ACT 401). As illustrated in FIG. 8B, if the user touches "first building 3F" of the list displayed in the map name region 106e on the display unit 106 of the portable terminal 100 so as to select a map, the control unit 101 displays the selected map of "first building 3F" in the map region 106f (ACT 402). As illustrated in FIG. 8C, the control unit 101 moves the current location mark 106g to the current location in the changed map (ACT 403).

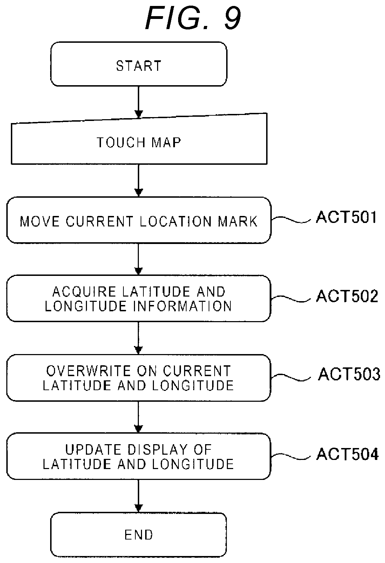

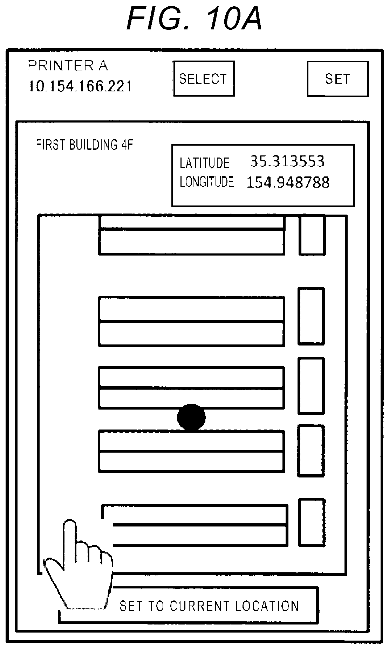

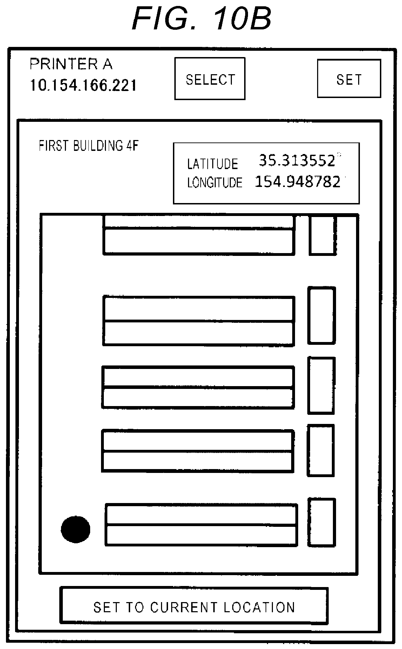

FIG. 9 is a flowchart illustrating an operation example during current location changing. As illustrated in FIG. 10A, if the user touches the map region 106f on the display unit 106 of the portable terminal 100, the control unit 101 moves the current location mark 106g to the touched location in the map region 106f as illustrated in FIG. 10B (ACT 501). The control unit 101 acquires latitude, longitude, and altitude information about the touched location from the map (ACT 502) . The control unit 101 overwrites the acquired latitude, longitude and altitude on the current latitude, longitude and altitude (ACT 503). As illustrated in FIG. 10B, the control unit 101 updates the display of the latitude and the longitude in the coordinate region 106d (ACT 504).

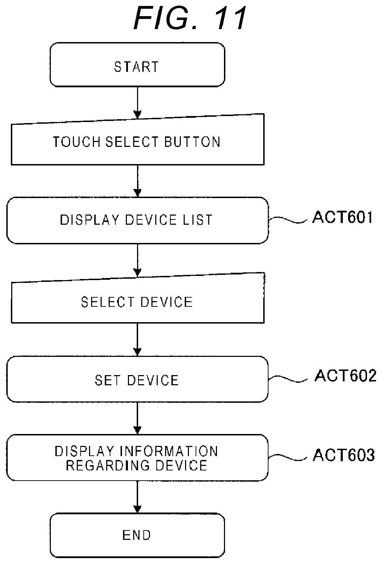

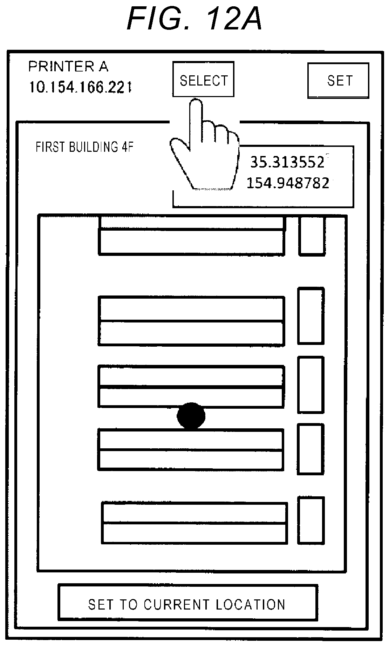

FIG. 11 is a flowchart illustrating an operation example during device changing in the portable terminal. As illustrated in FIG. 12A, if the user touches the select button 106a on the display unit 106 of the portable terminal 100, the control unit 101 displays devices included in the arrangement in the device region 106c in a list form (ACT 601).

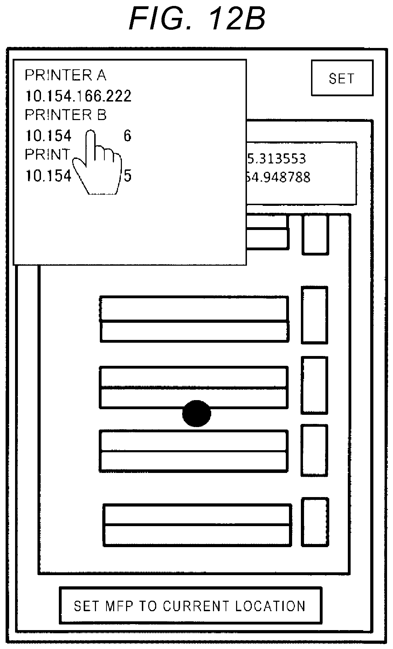

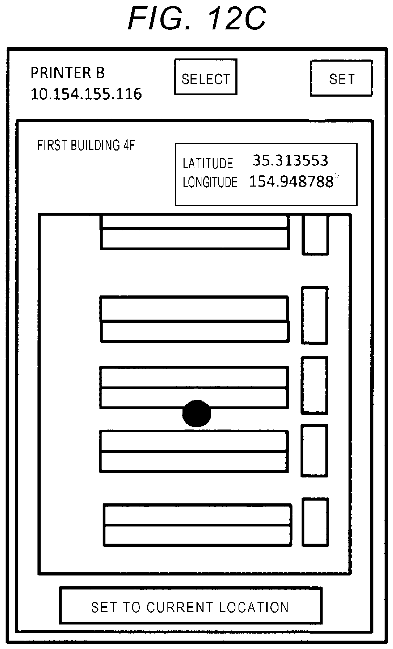

As illustrated in FIG. 12B, if the user touches "PRINTER B" of the list displayed in the device region 106c on the display unit 106 of the portable terminal 100 so as to select the device, and touches the set button 106b, the control unit 101 sets the selected device as a communication target device (ACT 602). As illustrated in FIG. 12C, the control unit 101 displays information regarding the communication target device in the device region 106c (ACT 603).

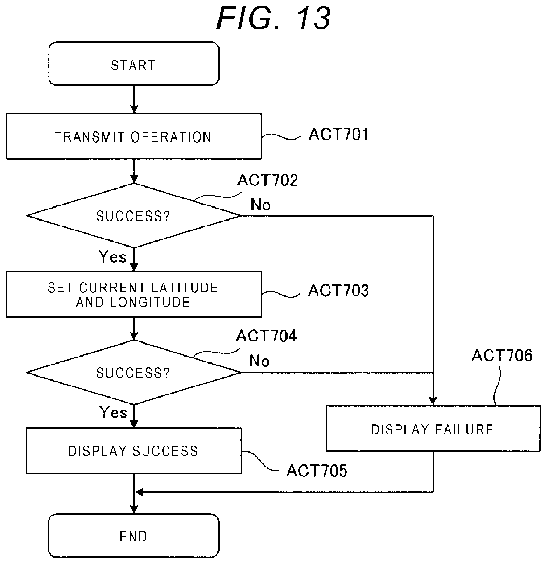

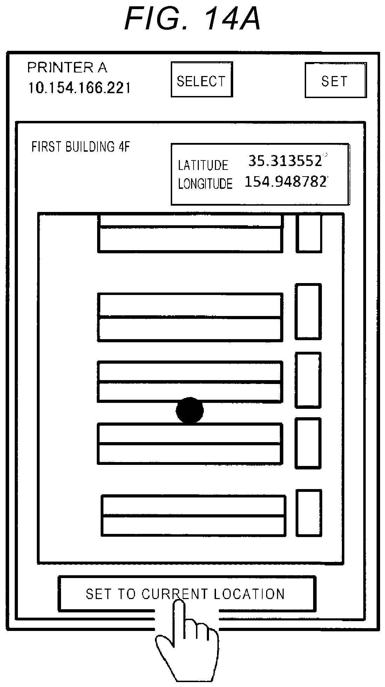

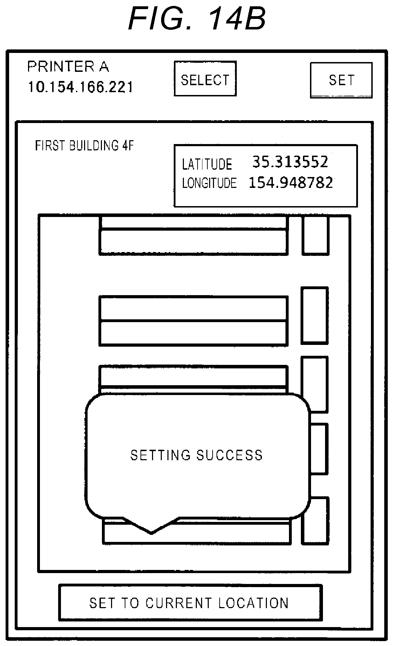

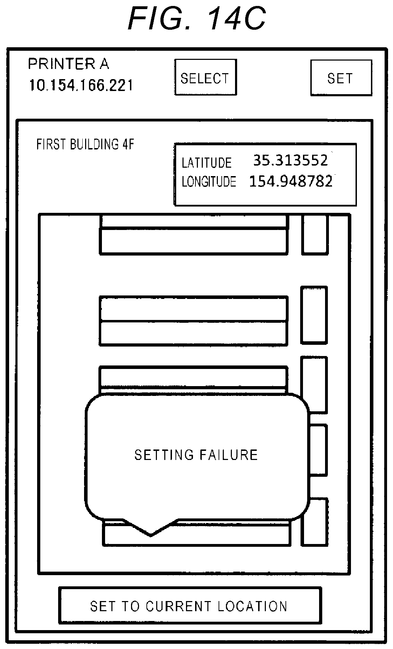

FIG. 13 is a flowchart illustrating an operation of registering location information in the image forming apparatus (e.g., one of image forming apparatuses 301 and 302) . If the current location set button 106h of the operation panel 106 is touched (FIG. 14A), the control unit 101 of the portable terminal 100 transmits Get-Printer-Attributes operation of IPP to the image forming apparatus via the access point 201 or 202 by using the external I/F 105 (ACT 701). The control unit 101 checks whether a response of success is received from the image forming apparatus (ACT 702). If so, the control unit 101 sets the current latitude, longitude and altitude in a geo-location in Set-Printer-Attributes of IPP, and transmits the geo-location to the image forming apparatus (ACT 703). The control unit 101 checks whether a response of success is received from the image forming apparatus (ACT 704). If so, the control unit 101 displays setting success on the operation panel 106 as illustrated in FIG. 14B (ACT 705). If there no response of success in ACTs 702 and 704, as illustrated in FIG. 14C, the control unit 101 displays setting failure on the operation panel 106 (ACT 706).

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A method for configuring an image forming apparatus using a portable terminal, comprising:
detecting a location of the portable terminal;
transmitting to a plurality of image forming apparatuses, including the image forming apparatus, a query for information about the image forming apparatuses;
displaying an operation panel on the portable terminal indicating the location of the portable terminal with the information about the image forming apparatuses;
accepting an operation on the operation panel to select the image forming apparatus; and
transmitting information about the location to the image forming apparatus.

2. The method according to claim 1, wherein the location of the portable terminal is displayed on a map.

3. The method according to claim 2, further comprising:
displaying coordinates of the location on the map.

4. The method according to any of claims 1 to 3, further comprising:
displaying a list of maps, each corresponding to a different building name and floor level,
wherein the map is selected from the list.

5. The method according to any of claims 1 to 4, further comprising:
displaying on the operation panel a list of information about each of a plurality of image forming apparatuses,
wherein the image forming apparatus is selected from the list.

6. The method according to any of claims 1 to 5, wherein the displaying comprises displaying on the operation panel a building name and a floor level.

7. The method according to any of claims 1 to 6, wherein the location is detected using a global positioning system (GPS) sensor or a geomagnetic sensor installed in the portable terminal.

8. A portable terminal configured to communicate with a plurality of image forming apparatuses, comprising:
a sensor configured to detect a location of the portable terminal;
a touch panel configured to accept an operation; and
a processor configured to execute instructions to:
transmit to each of the image forming apparatuses a query for information about the image forming apparatus;
display an operation panel on the touch panel indicating the location of the portable terminal with the information about at least one of the image forming apparatuses; and
transmit information about the location to one of the image forming apparatuses selected by an operation on the touch panel.

9. The portable terminal according to claim 8, wherein the processor executes instructions to display the location of the portable terminal on a map.

10. The portable terminal according to claim 9, wherein the processor executes instructions to display coordinates of the location on the map.

11. The portable terminal according to each of claims 8 to claim 10, wherein
the processor executes instructions to display a list of maps, each corresponding to a different building name and floor level, and
the map is selected from the list.

12. The portable terminal according to any of claims 8 to 11, wherein
the processor executes instructions to display on the operation panel a list of information about each of a plurality of image forming apparatuses, and
the image forming apparatus is selected from the list.

13. The portable terminal according to any of claims 8 to 12, wherein
the processor executes instructions to display on the operation panel a building name and a floor level.

14. The portable terminal according to any of claims 8 to 13, wherein
the sensor is a global positioning system (GPS) sensor or a geomagnetic sensor.

15. A non-transitory computer readable medium storing a program causing a computer to execute a method of configuring an image forming apparatus, said method comprising:
detecting a location of the portable terminal;
transmitting to a plurality of image forming apparatuses, including the image forming apparatus, a query for information about the image forming apparatuses;
displaying an operation panel on the portable terminal indicating the location of the portable terminal with the information about the image forming apparatuses;
accepting an operation on the operation panel to select the image forming apparatus; and
transmitting information about the location to the image forming apparatus.
